# EUROPEAN PATENT SPECIFICATION

(11) **EP 3 977 195 B1**
(45) Date of publication and mention of the grant of the patent: **18.12.2024**
(21) Application number: 20742890.5
(22) Date of filing: 27.05.2020
(51) Int. Cl.: G02B 27/01

(54) **PROJECTION SYSTEM FOR VEHICLES AND RELATED PROJECTION METHOD**
PROJEKTIONSSYSTEM FÜR FAHRZEUGE UND ENTSPRECHENDES PROJEKTIONSVERFAHREN
SYSTÈME DE PROJECTION POUR VÉHICULES ET PROCÉDÉ DE PROJECTION ASSOCIÉ

(30) Priority: 27.05.2019 IT 201900007278
(43) Date of publication of application: 06.04.2022
(73) Proprietor: MTA S.p.A., 26845 Codogno (Lodi) (IT)
(72) Inventor: PORCARO, Luca Francesco, 20077 Melegnano (MI) (IT); BOTTI, Emanuele Alfredo, 29121 Piacenza (PC) (IT); CASARI, Stefano, 29122 Piacenza (PC) (IT)
(74) Representative: Perani & Partners S.p.A.
(86) International application number: PCT/IB2020/054996
(87) International publication number: WO 2020/240421

(56) References cited:
- US-A1- 2012 069 415
- US-A1- 2014 232 736

## Description

### FIELD OF THE INVENTION

The present invention relates to a projection system for projecting images on windshields of vehicles.

The present invention also relates to a projection method that is carried out using such projection system.

### Discussion of the related art

A projection system is known in the art to be provided for installation in a vehicle. The projection system is equipped with a UV laser projector installed on the underside of the vehicle roof. The UV laser projects images into a large rectangular area of the windshield, having a predetermined size. A fluorescent layer is provided in this area for emitting visible light in response to the UV radiation emitted by the laser projector. The information so projected is visible on the windshield over the context of the outside environment, thereby creating a head-up display.

The presence of ambient light has a significant influence on the visibility of information projected onto the windshield. Therefore, in darker ambient conditions, for example at night, images of relatively low brightness are easily visible, whereas during the day the projection brightness must be increased.

On the other hand, the projection of full-screen images for high-brightness UV lasers would require enough power to increase the safety class of the projector. However, in higher power classes, regulations require safety measures, especially for human eye protection in the laser environment, which cannot be implemented by ordinary car passengers.

JP 2006047334 A discloses a system that ensures proper visibility while preventing eye damage in vehicle passengers. This projection system uses an optical zoom, obtained by adjusting the positions of certain lenses. UV images are not always projected full-screen, but with dimensions varying according to the ambient brightness as measured by a suitable light sensor. More in detail, as brightness increases, the image is reduced in size, and is projected with a higher luminous density, while the total power of the laser is maintained substantially constant. Measuring two different brightness levels are measured for image scaling, i.e. the brightness of the projected image and the brightness of the surrounding environment at least one point outside the projected image. The image zoom is then automatically adjusted to maintain the contrast between these two brightness levels within a specific range. In particular, the image widens in dark environments and bright projected images, and narrows for bright environments and dark projected images.

Other examples of projection systems for vehicles are known from US 2012/069415 A1 and US 2014/232736 A1.

### Prior art problem

In the prior art, the projection system uses an optical zoom to change the size of the laser illuminated windshield area in to adjust the brightness without modifying the total laser power. Nevertheless, the use of known projection systems in vehicles is not easy since such systems require the installation of lasers having optical zoom devices which, with their actuation and control systems, are particularly bulky and expensive. Furthermore, the continuous stresses acting upon such systems when the vehicle is moving, cause continuous oscillations and misalignments of the optical zoom lenses, resulting in a perceptible quality loss in the projected image. Moreover, the optical zoom in such systems requires relatively long actuation times which do not allow quick screen brightness adaptation. For example, this may be particularly problematic when a vehicle enters or exits a relatively dark tunnel, with a high-brightness daytime outdoor condition. Here, there is a real risk that an excessively long time may be required for light adaptation of the projection using the optical zoom. Therefore, the projected image might have a poor brightness and not be perceived by the driver's eye for a given interval of time or, even worse, may be so bright relative to the darkness of the tunnel as to affect proper visibility of the outside environment through the windshield.

### SUMMARY OF THE INVENTION

The object of the present invention is to provide a projection system for vehicle windshields and a corresponding projection method carried out using such system that can obviate the drawbacks of the prior art.

A further object of the present invention is to provide a projection system for vehicle windshields and a corresponding projection method that can ensure maximum safety during use, especially when the vehicle is moving.

Another object of the present invention is to provide a projection system for vehicle windshields and a corresponding projection method that can ensure continuous optimal visibility of the images projected on the windshield.

Yet another object of the present invention is to provide a projection system for vehicle windshields that has a smaller size and is easy to install in vehicles.

The aforementioned technical purpose and objects are substantially fulfilled by a projection system for vehicles and a projection method as defined in one or more of the accompanying claims.

### Benefits of the invention

One embodiment provides a projection system and a corresponding projection method that can ensure the highest safety for the driver of the vehicle, especially when the vehicle is moving.

One embodiment provides a projection system and a corresponding projection method that can project images on a windshield of a vehicle with an excellent definition and an adequate brightness ensuring good visibility with respect to the brightness of the outside environment.

One embodiment provides a projection method that ensures an optimal projection in terms of quality and brightness of the projected images thereby providing maximum safety to the driver of the vehicle.

### BIEF DESCRIPTION OF THE DRA WINGS

The characteristics and advantages of the present invention will result from the following detailed description of a possible practical embodiment, illustrated as a nonlimiting example in the set of drawings, in which:
- Figure 1 shows a projection system for vehicle windshields of the present invention,
- Figure 2 shows a detail of the projection system of Figure 1;
- Figures 3 to 6 schematically show a few aspects of the operation of the projection system of Figure 1,
- Figure 7 schematically shows further aspects of the operation of the projection system of Figure 1.

The projection system as shown in the accompanying figures shall be deemed to be schematically illustrated, not necessarily drawn to scale, and not necessarily representing the actual proportions of its parts.

### DETAILED DESCRIPTION

Even when this is not expressly stated, the individual features as described with reference to the particular embodiments shall be intended as auxiliary to and/or interchangeable with other features described with reference to other exemplary embodiments.

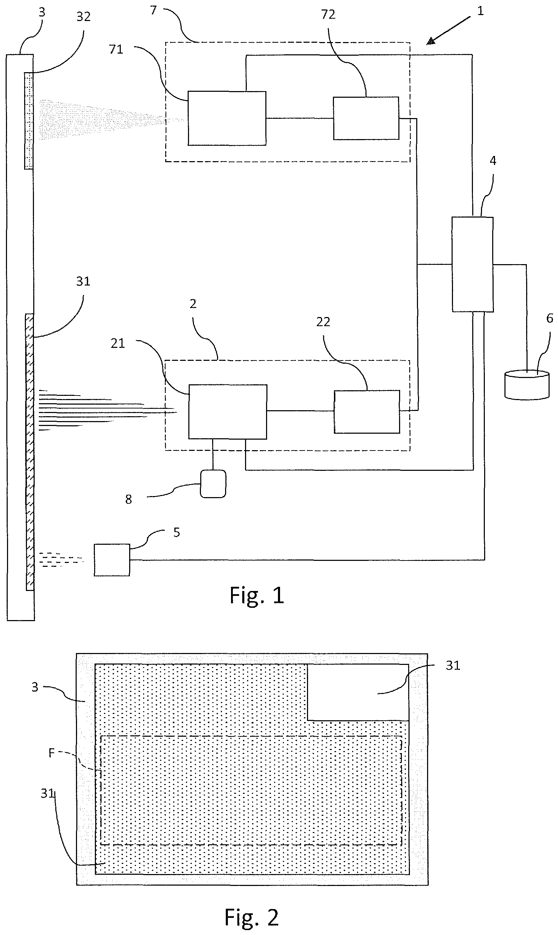

The present invention relates to a projection system 1 for vehicle windshields (Figures 1 and 2). Specifically, the projection system 1 of the present invention is designed for installation in the passenger compartment of a vehicle, and in particular in the passenger compartment of motor vehicles such a cars, vans and trucks. In a preferred embodiment, the projection system is designed for installation in the passenger compartment of agricultural and earth moving machines such as tractors. This is because the projection system 1can project images on the windscreen of the vehicle so that the driver in the passenger compartment can see the projected images on the background of the outside environment that is visible through the windshield. Obviously, the projection system 1 of the present invention may be installed so as to be able to project images on windshields or windows in compartments of other vehicles such as trains, planes and boats.

The projection system 1 comprises a laser projector 2 having a radiation source 21 configured to generate an electromagnetic radiation outside a visible wavelength region. The radiation source 21 generates electromagnetic radiation with constant wavelength and intensity, the total power of the laser projector 2 remaining substantially constant. Preferably, the laser projector 2 is a UV laser projector. More in detail, the laser projector 2 is of the raster type, i.e. uses spatial light modulation techniques by sequentially illuminating the pixel rows of a screen by controlling a movable mirror. Once the projection of the last row of an image has been terminated, a continuously actuated raster directly restarts from the first row of the next image. Special control circuits and algorithms provide continuous and accurate control of mirror movement, thereby ensuring maximum projection accuracy, repeatability and stability

The projection system 1 comprises a projection screen 3 in the form of a vehicle windshield which comprises a radiation-sensitive surface 31 capable of emitting light in the visible wavelength region when excited by the electromagnetic radiation emitted by the radiation source 21. The radiation-sensitive surface 31 comprises a multitude of parallel pixel rows, i.e. it comprises a predetermined number of pixel rows with each row being composed of a predetermined number of aligned pixels. The laser projector 2 is configured to cyclically scan the radiation-sensitive surface 31 and sequentially illuminate a predetermined number of pixel rows that are evenly arranged inside a projection window F identified in the radiation-sensitive surface 31 for each scan cycle, to thereby project an image in a raster graphics format. It should be noted here that raster graphics, also known as bitmap graphics, is well known in the art of computer graphics and is a technique used to describe an image in digital format. Therefore, raster graphics technology as such will not be described in detail here since it is well known in the art.

In a preferred arrangement of the invention, the radiation-sensitive surface 31 is capable of emitting fluorescent light in the visible wavelength region when excited by the electromagnetic radiation emitted by the radiation source 21. Preferably, the radiation-sensitive surface 31 contains fluorophores and is formed, for instance, by coating a surface layer containing them on the material that constitutes the windshield. The fluorophores embedded in the surface layer can emit light by fluorescence when excited by the electromagnetic radiation generated by the radiation source 21.

The projection system 1 comprises a processing unit 4 configured to control the laser projector 2 to determine the raster graphics of the image projected on the radiation-sensitive surface 31. Preferably, the processing unit comprises at least one CPU processor, that is either independent of or integrated in the on-board computer of the vehicle.

The projection system 1 comprises at least one ambient light sensor 5 in signal communication with the processing unit 4 and configured to sense ambient light in at least one region proximate to the radiation-sensitive surface 31. In other words, the ambient light sensor 5 detects the ambient light, i.e. the relative illumination in a zone that is close to the radiation-sensitive surface 31. According to a preferred arrangement, one or more ambient light sensors 5 are positioned and configured to sense the light in one or more of the following positions: Inside the passenger compartment of the vehicle, outside the passenger compartment of the vehicle and on the projection screen 3 of the windshield.

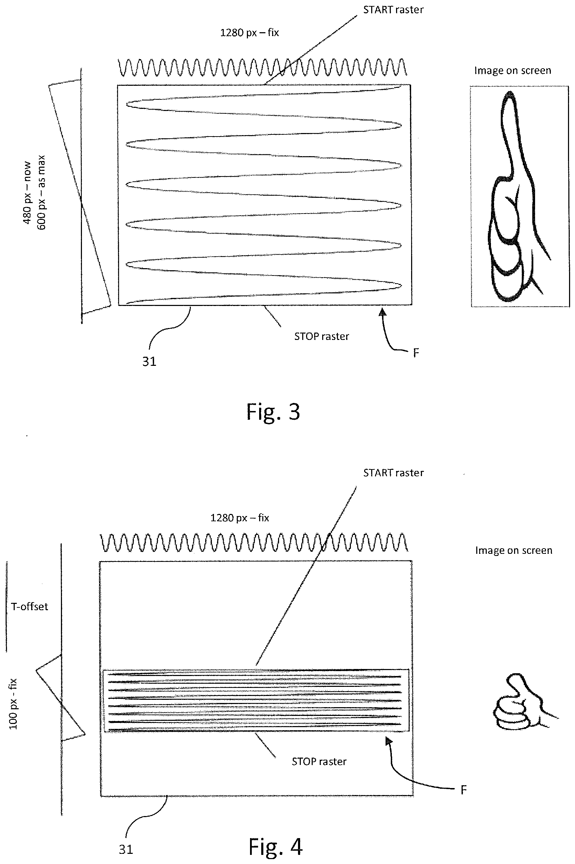

The processing unit 4 is configured to control the laser projector 2 to determine the size of the projection window F according to the ambient light that has been sensed by the ambient light sensor 5. That is, the laser projector 2 dynamically determines the size of the projection window F as a function of the ambient light that has been sensed by the ambient light sensor 5. Specifically, the size of the projection window F being scanned is decreased as ambient light increases, while increasing the distribution density of the number of pixel rows scanned by the laser projector 2 in the projection window F at each scan cycle, to thereby decrease the size of the projected image to increase its brightness (Figure 4). Likewise, the size of the projection window F being scanned is increased as ambient light decreases, while decreasing the distribution density of the number of pixel rows scanned by the laser projector 2 in the projection window F at each scan cycle, to thereby increase the size of the projected image to decrease its brightness (Figure 3).

According to a preferred arrangement of the invention, the number of pixel rows of the projection window (F) being scanned is decreased as ambient light increases, while maintaining he number of pixel rows scanned by the laser projector (2) in the projection window (F) constant at each scan cycle, to thereby decrease the size of the projected image to increase its brightness (Figure 4). Therefore, the reduced image thus has an area available thereto which has the same width, e.g. the width of the radiation-sensitive surface 31, and a smaller height, i.e. a smaller number of pixel rows.

Likewise, the number of pixel rows of the projection window F being scanned is increased as ambient light decreases, while maintaining the number of pixel rows scanned by the laser projector (2) in the projection window (F) constant at each scan cycle, to thereby increase the size of the projected image to decrease its brightness (Figure 3).

Preferably, the projection window F has a rectangular or square shape, is identified within the radiation-sensitive surface 31, and is defined by a variable number of rows of pixels and a fixed number of columns of pixels.

Figures 3 to 6 show a few examples of the operation of the laser projector 2 on the projection window F, in which the x-axis indicates the number of columns of pixels (where px stands for pixels) of the projection window F, which remains fixed. The y-axis indicates the value, expressed in pixels, of the number of rows of pixels in the projection window F. This value, i.e. the number of pixel rows in the projection window F, may vary to adjust the size of the projection window F. Here, it should be noted that the y-axis and the x-axis are two orthogonal axes lying on any oriented plane. Moreover, each figure has at its top the fixed sine signal that controls the scan performed by the laser projector 2 along the x-axis. At the left of the y-axis there is the polynomial signal which is varied from time to time to control the scan performed by the laser projector 2 along the y-axis. The raster scan process is illustratively shown in the projection window F. The image/s projected in the projection window F are shown on the right and in the figure the image reproduces the conventional OK hand gesture.

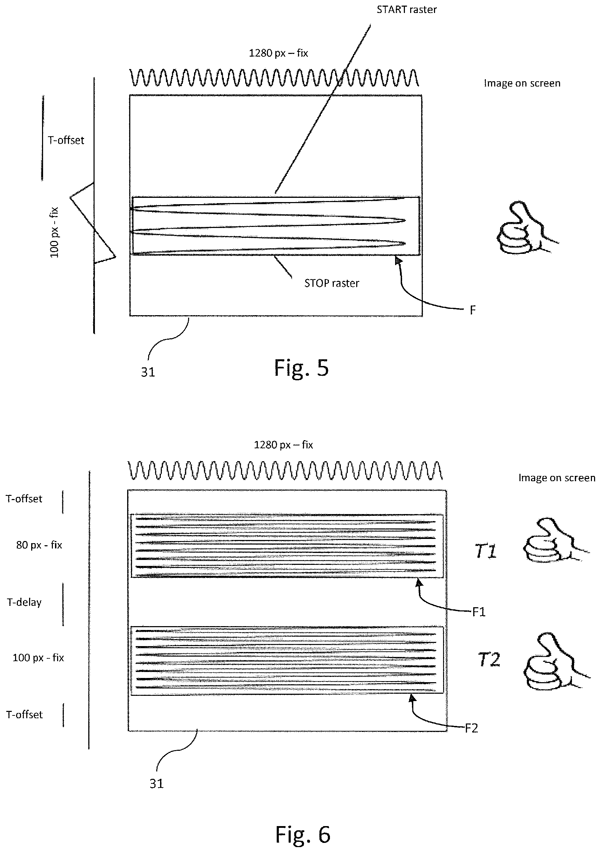

According to the invention, at each scan cycle, the processing unit 4 controls the laser projector 2 to scan each pixel row to be scanned at least twice before moving to the next row to be scanned, when the number of pixel rows of the projection window F being scanned reaches a predetermined minimum value, while decreasing the distribution density of the number of pixel rows scanned by the laser projector 2 in the projection window F at each scan cycle, to thereby further increase the brightness of the projected image while maintaining the size of the projected image constant (Figures 4 and 5). In other words, as the ambient light sensed by the light sensor 5 increases, for each scan cycle, each pixel row to be scanned is scanned at least twice before scanning the next row to be scanned, when the number of pixel rows of the projection window F being scanned reaches the preset minimum value of the number of pixel rows. Also, the distribution density of the number of pixel rows scanned by the laser projector 2 is changed at each scan cycle is decreased to further increase the brightness of the projected image while maintaining the size of the projection window F and the size of the projected image constant. That is, the brightness of the image may be increased by reducing its size, i.e. by reducing the size of the projection window F and increasing the distribution density of the pixel rows being scanned. However, gradual reduction of the image size leads to a critical value, in which the image is very bright but too little to be visible by the driver when projected on the windshield. Therefore, it would be desirable to set a fixed size of the projection window F and of the projected image, and scan each pixel row several times, while decreasing the density of the pixel rows to be scanned. By this arrangement, the total number of pixel rows to be scanned at each scan cycle remains constant.

Therefore, two alternative modes of operation are provided for the system to provide gradual increase of image brightness: i) in the former the size of the projection window F and hence the size of the projected image is decreased and the density of the pixel rows to be scanned is increased, while the total number of pixel rows scanned in each scan cycle remains constant (Figure 4); ii) in the latter the size of the projection window F and hence the size of the projected image is maintained constant, the density of the pixel rows to be scanned is reduced, but each pixel row is scanned several times, while the total number of pixel rows scanned in each scan cycle is maintained constant (Figure 5). Likewise, using the latter mode, ii) the brightness of the projected image may be gradually decreased by reducing the number of scans of each pixel row, while keeping the following unaltered: distribution density in the projection window F, size of the projection window F and the projected image, and number of pixel rows to be scanned at each scan cycle.

Advantageously, depending on ambient light or the conditions around the projection screen 3, images of various sizes may be projected. In high ambient light conditions, the projected images will be smaller and hence brighter. When the outside conditions are less severe, i.e. with a lower luminance, the projected images will be gradually increased in size and decreased in brightness until they reach the (maximum) size of the inner screen, i.e. the size of the radiation-sensitive surface 31.

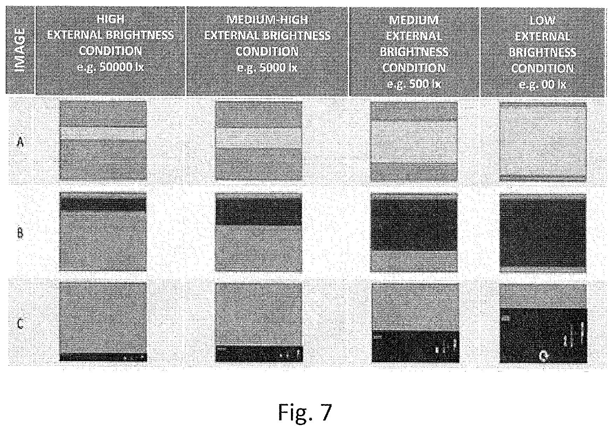

According to a preferred embodiment of the invention, the projection system 1 comprises a memory unit 6 in signal communication with the processing unit 4 and comprising data of the images to be projected using the laser projector 2. Such data concern a preset number of static images to be projected. Preferably, the number of images stored in the memory unit 6 in the various dimensional configurations is strongly reduced to ensure reliable operation of the system without overloading the processing unit 4 (Figure 7). In fact, the data stored in the memory unit 6 relate to the size of the projection window F, the scan mode and the distribution of the pixel rows of pixels to be scanned in the projection window F for each scan cycle and therefore a small number of images will be advantageously provided, as shown in the example of Figure 7 in which only three images are considered. Also preferably, the number of images to be projected, stored in the memory unit 6 is in the order of a few tens and, more preferably, in the order of ten images. Advantageously, a finite and known number of projected images is provided. Therefore, with a small number of images to be projected stored, it will be easy to provide and calculate the brightness curve that correlates the outside ambient light with the brightness of the projected image during the scan, as well as the distribution of the pixel rows to be scanned in the projection window F to adjust such brightness. In this respect, Figure 7 shows a few examples of three images A, B and C (on the y-axis), which are intended to be projected in four different environmental conditions (on the x-axis), i.e. in projection windows F of different sizes according to the outside light intensity, the latter being inversely proportional to the number of pixel rows of the projection window. In Figure 7, the larger rectangle represents the full projection screen (i.e. the radiation-sensitive surface 31), and the smaller rectangles represent from time to time the different projection windows in which the images are projected.

According to a preferred embodiment, the projection system 1 comprises a RGB laser projector 7 having a respective radiation source 71 configured to generate an electromagnetic radiation in a visible wavelength region. The RGB (Red, Green, Blue) laser projector is a laser in which colors are obtained as a sum of the red, green and blue base colors. The projection screen 3, comprises a reflecting surface 32 which is designed to reflect the electromagnetic radiation generated by the radiation source 71 of the RGB laser projector 7 and to thereby project a respective image on the reflecting surface 32. Preferably, the reflecting surface 32 at least partially overlaps the radiation-sensitive surface 31. More preferably, the reflecting surface 32 overlaps the radiation-sensitive surface 31 and is smaller than the radiation-sensitive surface 31 (Figure 2). The processing unit 4 is configured to control the RGB laser projector 7 to determine the graphics of the image projected on the reflecting surface 32.

In one embodiment of the projection system 1, the projection system 1 includes the presence of two laser projectors in a vehicle, i.e. a RGB (visible light) and UV projectors, installed side by side on the underside of the vehicle roof. The UV laser projector 2 projects images in a wide rectangular area of the windshield, i.e. on the radiation-sensitive surface 31. A fluorescent layer is provided in this area for emitting visible light in response to the UV radiation. Conversely, the RGB laser projector 7 acts on a smaller area, also having a rectangular shape, e.g. one corner of the UV area. The area that receives the RGB light, i.e. the reflecting surface 32 has a layer specially designed to reflect the projected images toward the interior of the vehicle. The information so projected is visible on the windshield over the context of the outside environment, thereby creating a head-up display. The projected images in the larger area, i.e. in the radiation-sensitive surface 31, that potentially create more disturbance, are selected from a limited list stored in a database (memory unit 6) and correspond to important, simple and immediate signals as danger signals. In the smaller area, i.e. the less invasive reflective surface 32, more detailed information about travel conditions may be displayed. The two UV 2 and RGB 7 laser projectors are controlled by a single central processing unit 5, via two distinct and respective video bridges 22,72.

According to one embodiment of the invention, alternative to the preferred embodiment in which the laser projector 2 is a UV laser projector and the radiation-sensitive surface 31 is capable of emitting fluorescent light, the radiation-sensitive surface 31 is capable of emitting light through luminescence. Preferably, the radiation-sensitive surface 31 contains anti-stokes or up-converting dyes. These dyes are luminescent materials capable of converting near infrared (NIR) laser light into visible light. Still according to this preferred embodiment, the laser projector 2 is an infrared (IR) laser projector.

According to a preferred arrangement of the invention, the projection system 1 comprises a presence sensor 8 in signal communication with the processing unit 4 and configured to detect the presence of at least one passenger in the passenger compartment of the vehicle. The processing unit 4 is configured to disable the laser projector 2 and also the RGB laser projector 7, if any, when the presence sensor 8 detects that the passenger compartment of the vehicle is empty. Preferably, the processing unit 4 is configured to enable the laser projector 2 and also the RGB laser projector 7, if any, when the presence sensor 8 detects that there is at least one person in the passenger compartment of the vehicle.

The present invention also relates to a method of projecting images on the windshield of a vehicle, using a projection system 1 for vehicle windshields as described above. Preferably, the method includes an initial step of providing a projection system according to the present invention.

The method comprises the step of determining the number of pixel rows being sequentially scanned in a projection window F at each scan cycle. In this step the processing unit 4 operating on the laser projector 2 is used to select and set the number of pixel rows that the laser will scan inside the projection window F at each scan cycle, to determine the projected image. Once the number of pixel rows to be scanned has been determined, it remains constant.

The method also comprises the step of projecting a predetermined image in the projection window F in a raster graphics format.

Furthermore, the method includes the step of gradually decreasing the number of pixel rows of the projection window (F) being scanned as the ambient light sensed by the light sensor increases, to a predetermined minimum number of pixel rows. Here, it shall be noted that the number of pixel rows to be scanned remains constant once it has been preset. This will increase the distribution density of the number of pixel rows scanned by the laser projector 2 inside the projection window F at each scan cycle, thereby decreasing the size of the projected image to increase its brightness. It shall be noted that while the distribution density of the number of pixel rows scanned inside the projection window increases, the pixel rows being scanned remain uniformly distributed inside the projection window F.

Likewise, the method includes the step of gradually increasing the number of pixel rows of the projection window F being scanned as the ambient light sensed by the light sensor decreases, to a predetermined maximum number of pixel rows, which coincides with the number of pixel rows of the radiation-sensitive surface 31. Thus will decrease the distribution density of the number of pixel rows scanned by the laser projector 2 at each scan cycle, thereby increasing the size of the projected image to reduce its brightness. It shall be noted that while the distribution density of the number of pixel rows scanned inside the projection window decreases, the pixel rows being scanned remain uniformly distributed inside the projection window F.

According to a preferred arrangement of the invention, as the ambient light sensed by the light sensor 5 increases, the method includes, for each scan cycle, scanning each pixel row at least twice before scanning the next row to be scanned, when the number of pixel rows of the projection window F being scanned reaches the preset minimum value of the number of pixel rows. Also, the distribution density of the number of pixel rows scanned by the laser projector 2 is changed at each scan cycle is decreased to further increase the brightness of the projected image while maintaining the size of the projection window F and the size of the projected image constant. That is, as mentioned above, the brightness of the image may be increased by reducing its size, i.e. by reducing the size of the projection window F and increasing the distribution density of the pixel rows being scanned. However, progressive reduction of the image size leads to a critical value, in which the image is very bright but too little to be visible by the driver when projected on the windshield. Therefore, it would be desirable to set a fixed size of the projection window F and of the projected image, and scan each pixel row several times, while decreasing the density of the pixel rows to be scanned. By this arrangement, the overall number of pixel rows to be scanned at each scan cycle must remain constant. In other words, two alternative modes may be used to gradually increase image brightness: i) in the former the size of the projection window F and hence the size of the projected image is decreased and the density of the pixel rows to be scanned is increased, while the number of pixel rows scanned in each scan cycle remains constant (Figure 4); ii) in the latter the size of the projection window F and hence the size of the projected image is maintained constant, the density of the pixel rows to be scanned is reduced, but each pixel row is scanned several times, while the number of pixel rows scanned in each scan cycle is maintained constant (Figure 5). Likewise, brightness may be gradually decreased by reducing the number of scans of each pixel row, while keeping the following unaltered: distribution density in the projection window F, size of the projection window F and the projected image, and number of pixel rows to be scanned at each scan cycle. Advantageously, in addition to relative illumination (brightness), the brightness difference between darker and brighter areas, i.e. contrast, may be also adjusted, as well as the sharpness of the projected image.

According to a preferred arrangement, the method includes determining a constant duration for each scan cycle on the projection window F. The scan cycles occur one after the other. Preferably, the method includes the step of waiting for a predetermined time interval between one scan cycle and the next scan cycle when carrying out one of the steps of gradually decreasing or increasing the number of pixel rows of the projection window F being scanned. It should be noted that the images are projected with a constant frame rate. Preferably, the frame rate of the laser projector 2 is 30 Hz. This derives from the consistency of the successive scan cycles on the projection window F. Nevertheless, regular repetition of scan cycles only includes a variation in the transition between successive cycles when the size of the projection window F changes. That is, the next cycle opens by waiting a predetermined offset interval, referenced T offset in the accompanying figures 4 to 6, when the size of projection window F is changed, to allow rephasing and recalibration of the laser projector 2 to the new size of the projection window F and to the redistribution of of pixel rows to be scanned. For example, when the projection window F is scaled down like in the transition from Figure 3 to Figure 4, the laser projector 2 remains off for the time required to align its position to be reactivated for the start of the next scan cycle ("start raster" in the figures) inside the resized projection window F. It shall be noted that the laser projector stop point ("stop raster" in the figures) is also changed at each scan cycle, to define the end of the scan inside the resized projection window F. When the laser reaches the scan end point ("stop raster"), a new scan cycle will start on the projection window F.

Advantageously, the starting point of the scan that will generate the image may be displaced by changing the T-offset, which will also adjust the size of projection window F.

Also advantageously, by changing the slope of the polynomial signal that adjusts the scan on the y-axis, the image may be formed with multiple scans on the same row or in any case with higher-density scans, resulting in an image having a greater brightness.

According to a preferred arrangement of the invention, the step of determining the number of of pixel rows sequentially scanned in the projection window F at each scan cycle, comprises the sub-step of determining a first projection window F1 and a distinct second projection window F2. Furthermore, the step of projecting a preset image in the projection window F in a raster graphics format comprises the substep of sequentially projecting, with repeated double scan cycles, the first predetermined image in the first projection window F1 in a first scan cycle and the second predetermined image in the second projection window F2 in the next second scan cycle, and so on. A substep is also provided of selecting the time interval between the first scan cycle and the next second scan cycle according to the brightness decay time of the radiation-sensitive surface 31 so that the viewing user may visually perceive a simultaneous projection of the first predetermined image in the first projection window F1 and the second predetermined image in the second projection window F2. The aforementioned preset interval of time between the first and second scan cycles is as shown in Figure 6 and indicated as delay time. In other words, two scan cycles are carried out and cyclically repeated, with the first cycle performing a scan on the first projection window F1 to project the first predetermined image, and the second cycle performs a scan on the second projection window F2 to project the second predetermined image (Figure 6). The time lapse between successive cycles is calibrated according to the decay time of the fluorophores of the radiation-sensitive surface 31, so that the cycles will be alternated to generate a visual effect that will allow the viewer to perceive simultaneous projection of the first and second images. That is, the decay time of the excitation of the fluorescent layer of the radiation-sensitive surface 31, after excitation by the laser projector 2 will ensure illumination during the time lapse between successive scans of that portion. Alternatively, the time at which the fluorescent layer stops emitting light between successive scan cycles on the relevant portion is so short that it cannot be perceived by the human eye. Advantageously, while two different images are sequentially projected over distinct areas of the radiation-sensitive surface 31, the user will perceive a simultaneous projection of both images due to the use of a single laser projector 2 instead of two separate projectors. Preferably, the first predetermined image and the second predetermined image may the same or different images. Advantageously, a simultaneous projection of two identical images or two distinct images may be obtained using a single laser projector 2. Also advantageously, by this arrangement a smaller number of materials or parts may be used, which will reduce the costs associated with fabrication of a projection system 1 and also simply fabrication, use, programming and operation of the projection system 1.

Advantageously, with the projection system 1 and method the brightness of the image projected on the projection screen 3 may be adjusted according to the intensity of the outside light using an optical zoom, without changing the power of the laser beam. An increase of the laser beam power might be harmful for the eyes of the driver and optical protections would be required to prevent eye damage, which are not suitable for drivers.

Those skilled in the art will obviously appreciate that a number of changes and variants as described above may be made to fulfill particular requirements, without departure from the scope of the invention, as defined in the following claims.

## Claims

1. A projection system (1) for vehicle windshields, comprising:
- a laser projector (2) having a radiation source (21) configured to generate an electromagnetic radiation outside a visible wavelength region with constant wavelength and intensity;
- a projection screen (3) formed as a vehicle windscreen and comprising a radiation-sensitive surface (31) which is able to emit light in the visible wavelength region when excited by the electromagnetic radiation emitted from the radiation source (21), the radiation-sensitive surface (31) comprising a multitude of parallel pixel rows, the laser projector (2) being configured to cyclically scan the radiation-sensitive surface (31) by sequentially illuminating a predetermined number of pixel rows that are uniformly arranged in a projection window (F) defined in the radiation-sensitive surface (31) for each scan cycle to thereby project an image in a raster graphics format;
- a processing unit (4) configured to control the laser projector (2) to determine the raster graphics of the image projected onto the radiation-sensitive surface (31);
- at least one ambient light sensor (5) in signal communication with the processing unit (4) and configured to sense ambient light in at least one region proximate to the radiation-sensitive surface (31);
- the processing unit (4) is configured to control the laser projector (2) to determine the size of the projection window (F) according to the ambient light that has been sensed by the ambient light sensor (5) such that:
- the size of the projection window (F) being scanned decreases as ambient light increases, while increasing the distribution density of the number of pixel rows scanned by the laser projector (2) in the projection window (F) at each scan cycle, to thereby decrease the size of the projected image to increase its brightness,
- the size of the projection window (F) being scanned increases as ambient light decreases, while decreasing the distribution density of the number of pixel rows scanned by the laser projector (2) in the projection window (F) at each scan cycle, to thereby increase the size of the projected image to decrease its brightness;
**characterized in that:**
- the number of pixel rows scanned by the laser projector (2) in the projection window (F) is maintained constant at each scan cycle;
- when the number of pixel rows of the scanned projection window (F) reaches a predetermined minimum value, as ambient light further increases, at each scan cycle, the laser projector (2) scans each pixel row to be scanned at least twice before moving to the next row to be scanned, , while decreasing the distribution density of the number of pixel rows scanned at least twice by the laser projector (2) in the projection window (F) at each scan cycle, to thereby further increase the brightness of the projected image while maintaining the size of projection window (F) and the size of the projected image constant.

2. A projection system (1) for vehicle windshields as claimed in claim 1, comprising: - a memory unit (6) in signal communication with the processing unit (4), and storing data of the images to be projected through the laser projector (2), such data relating to a predetermined number of static images to be projected.

3. A projection system (1) for vehicle windshields as claimed in any of the preceding claims, wherein:
- the laser projector (2) is a UV laser projector.

4. A projection system (1) for vehicle windshields as claimed in claim 3, comprising:
- a RGB laser projector (7) having a respective radiation source (71) configured to generate an electromagnetic radiation in a visible wavelength region;
wherein
- the projection screen (3), comprises a reflecting surface (32) designed to reflect the electromagnetic radiation generated by the radiation source (71) of the RGB laser projector (7) and projecting a respective image on the reflecting surface (32), toward the interior of the vehicle, the reflecting surface (32) being placed at least partially above the radiation-sensitive surface (31);
- the processing unit (4) is configured to control the RGB laser projector (7) to determine the graphics of the image projected on the reflecting surface (32).

5. A projection system (1) for vehicle windshields as claimed in any of the preceding claims, comprising:
- a presence sensor (8) in signal communication with the processing unit (4) and configured to detect the presence of at least one passenger in the passenger compartment of the vehicle;
wherein
- the processing unit (4) is configured to disable the laser projector (2) when the presence sensor (8) detects that the passenger compartment of the vehicle is empty.

6. A method of projecting images on the windshield of a vehicle by means of a projection system (1) for vehicle windshields as claimed as claimed in any of the preceding claims, comprising the steps of:
- determining the number of pixel rows being sequentially scanned in a projection window (F) at each scan cycle;
- projecting a predetermined image in the projection window (F) in a raster graphics format;
- gradually decreasing the number of pixel rows of the projection window (F) being scanned as the ambient light sensed by the light sensor increases, to a predetermined minimum number of pixel rows, while increasing the distribution density of the number of pixel rows scanned by the laser projector (2) at each scan cycle, thereby decreasing the size of the projected image to increase its brightness,
- gradually increasing the number of pixel rows of the projection window (F) being scanned as the ambient light sensed by the light sensor decreases, to a predetermined maximum number of pixel rows coinciding with the number of pixel rows of the radiation-sensitive surface 31, while decreasing the distribution density of the number of pixel rows scanned by the laser projector (2) at each scan cycle, thereby increasing the size of the projected image to decrease its brightness,
**characterized in that** it comprises the steps of:
- when the number of pixel rows of the scanned projection window (F) reaches the predetermined minimum number of pixel rows, as the ambient light sensed by the light sensor further increases, at each scan cycle, scanning each pixel row to be scanned at least twice before moving to the next row to be scanned, while decreasing the distribution density of the number of pixel rows scanned at least twice by the laser projector (2) in the projection window (F) at each scan cycle, to thereby further increase the brightness of the projected image while maintaining the size of projection window (F) and the size of the projected image constant.

7. A method of projecting images on the windshield of a vehicle as claimed in claim 6, comprising the steps of:
- determining a constant duration for each scan cycle on the projection window, the scan cycles occurring one after the other;
- waiting for a predetermined time interval between one scan cycle and the next scan cycle when carrying out one of the steps of gradually decreasing or increasing the number of pixel rows of the projection window (F) being scanned.

8. A method of projecting images on the windshield of a vehicle as claimed in claim 6 or 7, wherein:
- the step of determining the number of pixel rows sequentially scanned in the projection window (F) at each scan cycle, comprises the sub-step of determining a first projection window (F1) and a distinct second projection window (F2);
- the step of projecting a predetermined image in the projection window (F) in a raster graphics format comprises the sub-steps of:
- sequentially projecting, with repeated double scan cycles, the first predetermined image in the first projection window (F1) in a first scan cycle and the second predetermined image in the second projection window (F2) in the next second scan cycle,
- selecting the time interval between the first scan cycle and the next second scan cycle according to the brightness decay time of the radiation-sensitive surface (31) so that the viewing user may visually perceive a simultaneous projection of the first predetermined image in the first projection window (F1) and the second predetermined image in the second projection window (F2).

## Patentansprüche

1. Projektionssystem (1) für Fahrzeugwindschutzscheiben, umfassend:
- einen Laserprojektor (2) mit einer Strahlungsquelle (21), die so konfiguriert ist, dass sie eine elektromagnetische Strahlung außerhalb eines sichtbaren Wellenlängenbereichs mit konstanter Wellenlänge und Intensität erzeugt;
- einen Projektionsschirm (3), der als eine Fahrzeugfrontscheibe ausgebildet ist und eine strahlungsempfindliche Oberfläche (31) umfasst, die in der Lage ist, Licht im sichtbaren Wellenlängenbereich zu emittieren, wenn sie durch die von der Strahlungsquelle (21) emittierte elektromagnetische Strahlung angeregt wird, wobei die strahlungsempfindliche Oberfläche (31) eine Vielzahl von parallelen Pixelreihen umfasst, wobei der Laserprojektor (2) so konfiguriert ist, dass er die strahlungsempfindliche Oberfläche (31) zyklisch abtastet, indem er eine vorbestimmte Anzahl von Pixelreihen, die gleichmäßig in einem in der strahlungsempfindlichen Oberfläche (31) definierten Projektionsfenster (F) angeordnet sind, für jeden Abtastzyklus sequentiell beleuchtet, um dadurch ein Bild in einem Rastergrafikformat zu projizieren;
- eine Verarbeitungseinheit (4), die so konfiguriert ist, dass sie den Laserprojektor (2) steuert, um die Rastergrafik des auf die strahlungsempfindliche Oberfläche (31) projizierten Bildes zu bestimmen;
- mindestens einen Umgebungslichtsensor (5), der in Signalkommunikation mit der Verarbeitungseinheit (4) steht und so konfiguriert ist, dass er Umgebungslicht in mindestens einem Bereich in der Nähe der strahlungsempfindlichen Oberfläche (31) erfasst;
- die Verarbeitungseinheit (4) ist so konfiguriert, dass sie den Laserprojektor (2) so steuert, dass er die Größe des Projektionsfensters (F) gemäß dem Umgebungslicht, das vom Umgebungslichtsensor (5) erfasst wurde, so bestimmt, dass:
- die Größe des Projektionsfensters (F), das abgetastet wird, mit zunehmendem Umgebungslicht abnimmt, während die Verteilungsdichte der Anzahl der vom Laserprojektor (2) bei jedem Abtastzyklus im Projektionsfenster (F) abgetasteten Pixelreihen zunimmt, um dadurch die Größe des projizierten Bildes zu verringern und seine Helligkeit zu erhöhen,
- die Größe des Projektionsfensters (F), das abgetastet wird, mit abnehmendem Umgebungslicht zunimmt, während die Verteilungsdichte der Anzahl der vom Laserprojektor (2) abgetasteten Pixelreihen im Projektionsfenster (F) bei jedem Abtastzyklus abnimmt, um dadurch die Größe des projizierten Bildes zu vergrößern und seine Helligkeit zu verringern;
**dadurch gekennzeichnet, dass:**
- die Anzahl der vom Laserprojektor (2) im Projektionsfenster (F) abgetasteten Pixelreihen bei jedem Abtastzyklus konstant gehalten wird;
- wenn die Anzahl der Pixelreihen des abgetasteten Projektionsfensters (F) einen vorbestimmten Mindestwert erreicht, da das Umgebungslicht weiter zunimmt, der Laserprojektor (2) bei jedem Abtastzyklus jede abzutastende Pixelreihe mindestens zweimal abtastet, bevor er zur nächsten abzutastenden Reihe übergeht, während die Verteilungsdichte der Anzahl von Pixelreihen, die mindestens zweimal durch den Laserprojektor (2) in dem Projektionsfenster (F) bei jedem Abtastzyklus abgetastet werden, verringert wird, um dadurch die Helligkeit des projizierten Bildes weiter zu erhöhen, während die Größe des Projektionsfensters (F) und die Größe des projizierten Bildes konstant gehalten werden.

2. Projektionssystem (1) für Fahrzeugwindschutzscheiben nach Anspruch 1, umfassend:
- eine Speichereinheit (6), die in Signalkommunikation mit der Verarbeitungseinheit (4) steht und Daten der durch den Laserprojektor (2) zu projizierenden Bilder speichert, wobei sich diese Daten auf eine vorbestimmte Anzahl von zu projizierenden statischen Bildern beziehen.

3. Projektionssystem (1) für Fahrzeugwindschutzscheiben nach einem der vorhergehenden Ansprüche, wobei:
- der Laserprojektor (2) ein UV-Laserprojektor ist.

4. Projektionssystem (1) für Fahrzeugwindschutzscheiben nach Anspruch 3, umfassend:
- einen RGB-Laserprojektor (7) mit einer jeweiligen Strahlungsquelle (71), die so konfiguriert ist, dass sie eine elektromagnetische Strahlung in einem sichtbaren Wellenlängenbereich erzeugt;
wobei
- der Projektionsschirm (3) eine reflektierende Oberfläche (32) umfasst, die dazu bestimmt ist, die von der Strahlungsquelle (71) des RGB-Laserprojektors (7) erzeugte elektromagnetische Strahlung zu reflektieren und ein jeweiliges Bild auf die reflektierende Oberfläche (32) in Richtung des Innenraums des Fahrzeugs zu projizieren, wobei die reflektierende Oberfläche (32) zumindest teilweise oberhalb der strahlungsempfindlichen Oberfläche (31) angeordnet ist;
- die Verarbeitungseinheit (4) so konfiguriert ist, dass sie den RGB-Laserprojektor (7) steuert, um die Grafik des auf die reflektierende Oberfläche (32) projizierten Bildes zu bestimmen.

5. Projektionssystem (1) für Fahrzeugwindschutzscheiben nach einem der vorhergehenden Ansprüche, umfassend:
- einen Anwesenheitssensor (8), der mit der Verarbeitungseinheit (4) in Signalkommunikation steht und so konfiguriert ist, dass er die Anwesenheit mindestens eines Fahrgastes im Fahrgastraum des Fahrzeugs detektiert;
wobei
- die Verarbeitungseinheit (4) so konfiguriert ist, dass sie den Laserprojektor (2) deaktiviert, wenn der Anwesenheitssensor (8) detektiert, dass der Fahrgastraum des Fahrzeugs leer ist.

6. Verfahren zum Projizieren von Bildern auf die Windschutzscheibe eines Fahrzeugs mittels eines Projektionssystems (1) für Fahrzeugwindschutzscheiben nach einem der vorhergehenden Ansprüche, umfassend die Schritte:
- Bestimmen der Anzahl der Pixelreihen, die in einem Projektionsfenster (F) bei jedem Abtastzyklus sequentiell abgetastet werden;
- Projizieren eines vorbestimmten Bildes in das Projektionsfenster (F) in einem Rastergrafikformat;
- allmähliches Verringern der Anzahl der Pixelreihen des Projektionsfensters (F), das abgetastet wird, da das vom Lichtsensor erfasste Umgebungslicht zunimmt, bis zu einer vorbestimmten Mindestanzahl von Pixelreihen, während die Verteilungsdichte der Anzahl von Pixelreihen, die vom Laserprojektor (2) bei jedem Abtastzyklus abgetastet werden, erhöht wird, wodurch die Größe des projizierten Bildes verringert wird, um seine Helligkeit zu erhöhen,
- allmähliches Erhöhen der Anzahl der Pixelreihen des Projektionsfensters (F), das abgetastet wird, da das vom Lichtsensor erfasste Umgebungslicht abnimmt, bis zu einer vorbestimmten maximalen Anzahl von Pixelreihen, die mit der Anzahl von Pixelreihen der strahlungsempfindlichen Oberfläche 31 übereinstimmt, während die Verteilungsdichte der Anzahl von Pixelreihen, die von dem Laserprojektor (2) bei jedem Abtastzyklus abgetastet werden, verringert wird, wodurch die Größe des projizierten Bildes erhöht wird, um seine Helligkeit zu verringern,
**dadurch gekennzeichnet, dass** es die folgenden Schritte umfasst:
- wenn die Anzahl der Pixelreihen des abgetasteten Projektionsfensters (F) die vorbestimmte Mindestanzahl von Pixelreihen erreicht, da das vom Lichtsensor erfasste Umgebungslicht weiter zunimmt, bei jedem Abtastzyklus, Abtasten von jeder abzutastenden Pixelreihe mindestens zweimal, bevor zur nächsten abzutastenden Reihe übergegangen wird, während die Verteilungsdichte der Anzahl von Pixelreihen, die mindestens zweimal durch den Laserprojektor (2) in dem Projektionsfenster (F) bei jedem Abtastzyklus abgetastet werden, verringert wird, um dadurch die Helligkeit des projizierten Bildes weiter zu erhöhen, während die Größe des Projektionsfensters (F) und die Größe des projizierten Bildes konstant gehalten werden.

7. Verfahren zum Projizieren von Bildern auf die Windschutzscheibe eines Fahrzeugs nach Anspruch 6, umfassend die folgenden Schritte:
- Bestimmen einer konstanten Dauer für jeden Abtastzyklus auf dem Projektionsfenster, wobei die Abtastzyklen nacheinander erfolgen;
- Warten auf ein vorbestimmtes Zeitintervall zwischen einem Abtastzyklus und dem nächsten Abtastzyklus, wenn einer der Schritte des allmählichen Verringerns oder Erhöhens der Anzahl der Pixelreihen des Projektionsfensters (F), das abgetastet wird, ausgeführt wird.

8. Verfahren zum Projizieren von Bildern auf die Windschutzscheibe eines Fahrzeugs nach Anspruch 6 oder 7, wobei:
- der Schritt des Bestimmens der Anzahl von Pixelreihen, die in dem Projektionsfenster (F) bei jedem Abtastzyklus sequentiell abgetastet werden, den Teilschritt des Bestimmens eines ersten Projektionsfensters (F1) und eines unterschiedlichen zweiten Projektionsfensters (F2) umfasst;
- der Schritt des Projizierens eines vorbestimmten Bildes in das Projektionsfenster (F) in einem Rastergrafikformat die folgenden Teilschritte umfasst:
- sequentielles Projizieren mit wiederholten Doppelabtastzyklen des ersten vorbestimmten Bildes in das erste Projektionsfenster (F1) in einem ersten Abtastzyklus und des zweiten vorbestimmten Bildes in das zweite Projektionsfenster (F2) in dem nächsten zweiten Abtastzyklus,
- Auswählen des Zeitintervalls zwischen dem ersten Abtastzyklus und dem nächsten zweiten Abtastzyklus entsprechend der Abfallzeit der Helligkeit der strahlungsempfindlichen Oberfläche (31), so dass der betrachtende Benutzer visuell eine gleichzeitige Projektion des ersten vorbestimmten Bildes in dem ersten Projektionsfenster (F1) und des zweiten vorbestimmten Bildes in dem zweiten Projektionsfenster (F2) wahrnehmen kann.

## Revendications

1. Système de projection (1) pour des pare-brise de véhicule, comprenant :
- un projecteur laser (2) ayant une source de rayonnement (21) configurée pour générer un rayonnement électromagnétique à l'extérieur d'une région de longueur d'onde du visible avec une longueur d'onde et une intensité constantes ;
- un écran de projection (3) se présentant sous la forme d'un pare-brise de véhicule et comprenant une surface sensible aux rayonnements (31) qui est apte à émettre une lumière dans la région de longueur d'onde du visible lorsqu'elle est excitée par le rayonnement électromagnétique émis par la source de rayonnement (21), la surface sensible aux rayonnements (31) comprenant une multitude de rangées de pixels parallèles, le projecteur laser (2) étant configuré pour balayer de manière cyclique la surface sensible aux rayonnements (31) en éclairant en séquence un nombre prédéterminé de rangées de pixels qui sont uniformément agencées dans une fenêtre de projection (F) définie dans la surface sensible aux rayonnements (31) pour chaque cycle de balayage pour ainsi projeter une image dans un format de représentation graphique ligne par ligne ;
- une unité de traitement (4) configurée pour commander le projecteur laser (2) pour déterminer la représentation graphique ligne par ligne de l'image projetée sur la surface sensible aux rayonnements (31) ;
- au moins un capteur de lumière ambiante (5) en communication de signal avec l'unité de traitement (4) et configuré pour capter une lumière ambiante dans au moins une région à proximité de la surface sensible aux rayonnements (31) ;
- l'unité de traitement (4) est configurée pour commander le projecteur laser (2) pour déterminer la taille de la fenêtre de projection (F) selon la lumière ambiante qui a été captée par le capteur de lumière ambiante (5) de sorte que :
- la taille de la fenêtre de projection (F) qui est balayée diminue à mesure que la lumière ambiante augmente, tout en augmentant la densité de distribution du nombre de rangées de pixels balayées par le projecteur laser (2) dans la fenêtre de projection (F) à chaque cycle de balayage, pour ainsi diminuer la taille de l'image projetée pour augmenter sa luminosité,
- la taille de la fenêtre de projection (F) qui est balayée augmente à mesure que la lumière ambiante diminue, tout en diminuant la densité de distribution du nombre de rangées de pixels balayées par le projecteur laser (2) dans la fenêtre de projection (F) à chaque cycle de balayage, pour ainsi augmenter la taille de l'image projetée pour diminuer sa luminosité ;
**caractérisé en ce que:**
- le nombre de rangées de pixels balayées par le projecteur laser (2) dans la fenêtre de projection (F) est maintenu constant à chaque cycle de balayage ;
- lorsque le nombre de rangées de pixels de la fenêtre de projection (F) balayée atteint une valeur minimale prédéterminée, à mesure que la lumière ambiante augmente davantage, à chaque cycle de balayage, le projecteur laser (2) balaye chaque rangée de pixels devant être balayée au moins deux fois avant de passer à la rangée suivante devant être balayée, tout en diminuant la densité de distribution du nombre de rangées de pixels balayées au moins deux fois par le projecteur laser (2) dans la fenêtre de projection (F) à chaque cycle de balayage, pour ainsi augmenter davantage la luminosité de l'image projetée tout en maintenant constantes la taille de la fenêtre de projection (F) et la taille de l'image projetée.

2. Système de projection (1) pour des pare-brise de véhicule selon la revendication 1, comprenant :
- une unité mémoire (6) en communication de signal avec l'unité de traitement (4) et stockant des données des images devant être projetées par le biais du projecteur laser (2), ces données se rapportant à un nombre prédéterminé d'images statiques devant être projetées.

3. Système de projection (1) pour des pare-brise de véhicule selon l'une quelconque des revendications précédentes, dans lequel :
- le projecteur laser (2) est un projecteur laser ultraviolet, UV.

4. Système de projection (1) pour des pare-brise de véhicule selon la revendication 3, comprenant :
- un projecteur laser RVB (7) ayant une source de rayonnement (71) respective configurée pour générer un rayonnement électromagnétique dans une région de longueur d'onde du visible ;
dans lequel
- l'écran de projection (3) comprend une surface réfléchissante (32) conçue pour réfléchir le rayonnement électromagnétique généré par la source de rayonnement (71) du projecteur laser RVB (7) et projetant une image respective sur la surface réfléchissante (32), vers l'intérieur du véhicule, la surface réfléchissante (32) étant placée au moins partiellement au-dessus de la surface sensible aux rayonnements (31) ;
- l'unité de traitement (4) est configurée pour commander le projecteur laser RVB (7) pour déterminer la représentation graphique de l'image projetée sur la surface réfléchissante (32).

5. Système de projection (1) pour des pare-brise de véhicule selon l'une quelconque des revendications précédentes, comprenant :
- un capteur de présence (8) en communication de signal avec l'unité de traitement (4) et configuré pour détecter la présence d'au moins un passager dans l'habitacle du véhicule ;
dans lequel
- l'unité de traitement (4) est configurée pour désactiver le projecteur laser (2) lorsque le capteur de présence (8) détecte que l'habitacle du véhicule est inoccupé.

6. Procédé de projection d'images sur le pare-brise d'un véhicule au moyen d'un système de projection (1) pour des pare-brise de véhicule selon l'une quelconque des revendications précédentes, comprenant les étapes de :
- la détermination du nombre de rangées de pixels qui sont balayées en séquence dans une fenêtre de projection (F) à chaque cycle de balayage ;
- la projection d'une image prédéterminée dans la fenêtre de projection (F) dans un format de représentation graphique ligne par ligne ;
- la diminution graduelle du nombre de rangées de pixels de la fenêtre de projection (F) qui est balayée à mesure que la lumière ambiante captée par le capteur de lumière augmente, jusqu'à un nombre minimal prédéterminé de rangées de pixels, tout en augmentant la densité de distribution du nombre de rangées de pixels balayées par le projecteur laser (2) à chaque cycle de balayage, ce qui diminue la taille de l'image projetée pour augmenter sa luminosité,
- l'augmentation graduelle du nombre de rangées de pixels de la fenêtre de projection (F) qui est balayée à mesure que la lumière ambiante captée par le capteur de lumière diminue, jusqu'à un nombre maximal prédéterminé de rangées de pixels coïncidant avec le nombre de rangées de pixels de la surface sensible aux rayonnements 31, tout en diminuant la densité de distribution du nombre de rangées de pixels balayées par le projecteur laser (2) à chaque cycle de balayage, ce qui augmente la taille de l'image projetée pour diminuer sa luminosité,
**caractérisé en ce qu'il** comprend les étapes de :
- lorsque le nombre de rangées de pixels de la fenêtre de projection (F) balayée atteint le nombre minimal prédéterminé de rangées de pixels, à mesure que la lumière ambiante captée par le capteur de lumière augmente davantage, à chaque cycle de balayage, le balayage de chaque rangée de pixels devant être balayée au moins deux fois avant de passer à la rangée suivante devant être balayée, tout en diminuant la densité de distribution du nombre de rangées de pixels balayées au moins deux fois par le projecteur laser (2) dans la fenêtre de projection (F) à chaque cycle de balayage, pour ainsi augmenter davantage la luminosité de l'image projetée tout en maintenant constantes la taille de la fenêtre de projection (F) et la taille de l'image projetée.

7. Procédé de projection d'images sur le pare-brise d'un véhicule selon la revendication 6, comprenant les étapes de :
- la détermination d'une durée constante pour chaque cycle de balayage sur la fenêtre de projection, les cycles de balayage ayant lieu les uns après les autres ;
- le fait d'attendre pendant un intervalle temporel prédéterminé entre un cycle de balayage et le cycle de balayage suivant lors de la mise en oeuvre de l'une des étapes de diminution ou d'augmentation graduelle du nombre de rangées de pixels de la fenêtre de projection (F) qui est balayée.

8. Procédé de projection d'images sur le pare-brise d'un véhicule selon la revendication 6 ou 7, dans lequel :
- l'étape de détermination du nombre de rangées de pixels balayées en séquence dans la fenêtre de projection (F) à chaque cycle de balayage comprend la sous-étape de détermination d'une première fenêtre de projection (F1) et d'une seconde fenêtre de projection (F2) distincte ;
- l'étape de projection d'une image prédéterminée dans la fenêtre de projection (F) dans un format de représentation graphique ligne par ligne comprend les sous-étapes de :
- la projection en séquence, selon des cycles de balayage double répétés, de la première image prédéterminée dans la première fenêtre de projection (F1) pendant un premier cycle de balayage et de la seconde image prédéterminée dans la seconde fenêtre de projection (F2) pendant le second cycle de balayage suivant,
- la sélection de l'intervalle temporel entre le premier cycle de balayage et le second cycle de balayage suivant selon la durée de décroissance de luminosité de la surface sensible aux rayonnements (31), de sorte que l'utilisateur observateur puisse visuellement percevoir une projection simultanée de la première image prédéterminée dans la première fenêtre de projection (F1) et de la seconde image prédéterminée dans la seconde fenêtre de projection (F2).
